# EUROPEAN PATENT APPLICATION

(11) **EP 4 360 940 A1**
(43) Date of publication of application: **01.05.2024**
(21) Application number: 23206295.0
(22) Date of filing: 27.10.2023
(51) Int. Cl.: B60L 53/30, B60L 53/65, B60L 53/67, B60L 53/68, B60L 53/80

(54) **METHOD FOR INFORMING OF BATTERY REPLACEMENT FACILITY, AND SERVER**

(30) Priority: 28.10.2022 JP 2022173412
(71) Applicant: TOYOTA JIDOSHA KABUSHIKI KAISHA, Toyota-shi, Aichi-ken, 471-8571 (JP)
(72) Inventor: MURATA, Soshiro, TOYOTA-SHI, AICHI-KEN, 471-8571 (JP); UMENO, Hiroshi, TOYOTA-SHI, AICHI-KEN, 471-8571 (JP); NOMURA, Takahiro, TOYOTA-SHI, AICHI-KEN, 471-8571 (JP); ONOZUKA, Yuya, TOYOTA-SHI, AICHI-KEN, 471-8571 (JP)
(74) Representative: Cabinet Beau de Loménie

(57) **Abstract**

A method for informing of a battery station (20) (battery replacement facility) includes acquiring information (condition information) about a condition emphasized by a user of an electric vehicle (10), out of a plurality of conditions for a plurality of battery stations (20) for replacement of a battery (11) (secondary battery) mounted on the electric vehicle (10). The method for informing of the battery station (20) includes determining at least one battery station (20), which is recommended to the user out of the plurality of battery stations (20), by evaluating each of the plurality of battery stations (20) based on the information. The method for informing of the battery station (20) includes notifying the user of information about the at least one battery station (20).

## Description

### CROSS REFERENCE TO RELATED APPLICATIONS

This nonprovisional application is based on Japanese Patent Application No. 2022-173412 filed on October 28, 2022 with the Japan Patent Office, the entire contents of which are hereby incorporated by reference and to which the person of the art can refer to when considering the present disclosure.

### BACKGROUND

### Field

The present disclosure relates a method for informing of a battery replacement facility, and a server.

### Description of the Background Art

Japanese Patent Laying-Open No. 2014-135892 discloses an electric vehicle that identifies, based on a charge status of a battery of the electric vehicle and a location of the electric vehicle, a battery service station that the electric vehicle can reach.

### SUMMARY

In the vehicle disclosed in Japanese Patent Laying-Open No. 2014-135892, the battery service station that the vehicle can reach may not meet a condition emphasized by a user with respect to a battery service station. Therefore, it is desired to enable a user of an electric vehicle to readily use a battery service station (battery replacement facility) that meets a condition emphasized by the user.

The present disclosure was made to solve such a problem, and has an object to provide a method for informing of a battery replacement facility and a server, that enable a user of an electric vehicle to readily use a battery replacement facility that meets a condition emphasized by the user.

A method for informing of a battery replacement facility according to a first aspect of the present disclosure includes: acquiring condition information about a condition emphasized by a user of an electric vehicle, out of a plurality of conditions for a plurality of battery replacement facilities for replacement of a secondary battery mounted on the electric vehicle; determining at least one recommended facility by evaluating each of the plurality of battery replacement facilities based on the condition information, the at least one recommended facility being a battery replacement facility recommended to the user out of the plurality of battery replacement facilities; and notifying the user of information about the at least one recommended facility.

In the method for informing of a battery replacement facility according to the first aspect of the present disclosure, the recommended facility is determined based on the condition information, as described above. Thus, the user can readily acquire information about a battery replacement facility that meets a condition emphasized by the user. As a result, the user can readily use the battery replacement facility that meets the condition emphasized by the user.

In the method for informing of a battery replacement facility according to the first aspect, preferably, the determining includes determining the at least one recommended facility by evaluating each of the plurality of battery replacement facilities such that an effect of evaluation based on the condition emphasized by the user out of the plurality of conditions is greater than an effect of evaluation based on a condition other than the condition emphasized by the user out of the plurality of conditions. With such a configuration, evaluation of a battery replacement facility that meets a condition emphasized by the user can be readily increased. As a result, the user can more readily use the battery replacement facility that meets the condition emphasized by the user.

The method for informing of a battery replacement facility according to the first aspect preferably further includes, when the recommended facility notified by the notifying is reserved by the user, and then another battery replacement facility is evaluated more highly than the reserved recommended facility, prompting the user to perform battery replacement in the another battery replacement facility. With such a configuration, the user can readily use a battery replacement facility that better meets a condition emphasized by the user.

In the method for informing of a battery replacement facility according to the first aspect, preferably, the determining includes determining the at least one recommended facility by evaluating each of the plurality of battery replacement facilities such that, when the emphasized condition includes a condition on a distance between the electric vehicle and the battery replacement facility, a battery replacement facility shorter in the distance is evaluated more highly. With such a configuration, when the user emphasizes the shortness of the distance between the electric vehicle and the battery replacement facility, the user can readily use a battery replacement facility relatively short in the distance.

In the method for informing of a battery replacement facility according to the first aspect, preferably, the determining includes determining the at least one recommended facility by evaluating each of the plurality of battery replacement facilities such that, when the emphasized condition includes a condition on a time required for the electric vehicle to arrive at the battery replacement facility, a battery replacement facility shorter in the time is evaluated more highly. With such a configuration, when the user emphasizes the shortness of the time required for the electric vehicle to arrive at the battery replacement facility, the user can readily use a battery replacement facility relatively short in the time.

In the method for informing of a battery replacement facility according to the first aspect, preferably, the determining includes determining the at least one recommended facility by evaluating each of the plurality of battery replacement facilities such that, when the emphasized condition includes a condition on a wait time until a battery replacement operation is performed, a battery replacement facility shorter in the wait time is evaluated more highly. With such a configuration, when the user emphasizes the shortness of the wait time until a battery replacement operation is performed, the user can readily use a battery replacement facility relatively short in the wait time.

In the method for informing of a battery replacement facility according to the first aspect, preferably, the determining includes determining the at least one recommended facility by evaluating each of the plurality of battery replacement facilities such that, when the emphasized condition includes a condition of whether or not the battery replacement facility stores a specific type of battery, evaluation corresponding to a battery replacement facility storing the specific type of battery is higher than evaluation corresponding to a battery replacement facility not storing the specific type of battery. With such a configuration, when the user emphasizes the fact that a specific type of battery is stored, the user can readily use a battery replacement facility storing the specific type of battery.

In the method for informing of a battery replacement facility according to the first aspect, preferably, the plurality of battery replacement facilities include a new battery replacement facility of a new type, and an old battery replacement facility of an old type. The determining includes determining the at least one recommended facility by evaluating each of the plurality of battery replacement facilities such that, when the emphasized condition includes a condition on newness of the battery replacement facility, evaluation corresponding to the new battery replacement facility is higher than evaluation corresponding to the old battery replacement facility. With such a configuration, when the user emphasizes the newness of a battery replacement facility, the user can readily use a new battery replacement facility.

In the method for informing of a battery replacement facility according to the first aspect, preferably, the determining includes determining the at least one recommended facility by evaluating each of the plurality of battery replacement facilities such that, when the emphasized condition includes a condition on a facility near the battery replacement facility, evaluation corresponding to a battery replacement facility with a specific facility located nearby is higher than evaluation corresponding to a battery replacement facility without the specific facility located nearby. With such a configuration, when the user emphasizes the fact that a specific facility is located near the battery replacement facility, the user can readily use a battery replacement facility with the specific facility located nearby.

In the method for informing of a battery replacement facility according to the first aspect, preferably, the at least one recommended facility includes a plurality of recommended facilities. The notifying includes displaying a rank of evaluation corresponding to each of the plurality of recommended facilities on a display terminal of the user. With such a configuration, the user can readily use a battery replacement facility that better meets a condition emphasized by the user, based on the ranks of evaluations displayed on the display terminal.

The method for informing of a battery replacement facility according to the first aspect preferably further includes, when an operation of searching for a battery replacement facility for battery replacement out of the plurality of battery replacement facilities is performed on an input terminal of the user, performing control of prompting the user to enter the emphasized condition into the input terminal. Such a configuration can prevent the user from forgetting the operation of entering the condition emphasized by the user.

In the method for informing of a battery replacement facility according to the first aspect, preferably, the at least one recommended facility includes a plurality of recommended facilities. The notifying includes displaying a recommended facility evaluated to be higher than a predetermined rank out of the plurality of recommended facilities on a map on a display terminal of the user, without displaying a recommended facility evaluated to be lower than or equal to the predetermined rank out of the plurality of recommended facilities on the map. Such a configuration can prevent the user from using a battery replacement facility that poorly meets the emphasized condition out of the plurality of recommended facilities.

In the method for informing of a battery replacement facility according to the first aspect, preferably, the notifying includes, when an operation of searching for a battery replacement facility for battery replacement out of the plurality of battery replacement facilities is performed by the user, and the condition information is not acquired, displaying all battery replacement facilities located within a predetermined distance from the electric vehicle out of the plurality of battery replacement facilities on a map on a display terminal of the user. With such a configuration, even when the condition information is not acquired, the user can acquire location information about all battery replacement facilities located within the predetermined distance.

A server according to a second aspect of the present disclosure includes: an acquisition unit that acquires condition information about a condition emphasized by a user of an electric vehicle, out of a plurality of conditions for a plurality of battery replacement facilities for replacement of a secondary battery mounted on the electric vehicle; and a control unit that performs control of notifying the user of information about at least one recommended facility, the at least one recommended facility being a battery replacement facility recommended to the user out of the plurality of battery replacement facilities. The control unit determines the at least one recommended facility based on the condition information.

In the server according to the second aspect of the present disclosure, the recommended facility is determined based on the condition information, as described above. Thus, a server can be provided that enables a user to readily use a battery replacement facility that meets a condition emphasized by the user.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a configuration of a battery replacement management system according to one embodiment.
Fig. 2 is a first diagram showing an exemplary screen in a car navigation system.
Fig. 3 is a second diagram showing an exemplary screen in the car navigation system.
Fig. 4 is a sequence diagram showing sequence control of the battery replacement management system according to one embodiment.
Fig. 5 is a flow diagram showing a process of extracting battery stations in the sequence of Fig. 4.
Fig. 6 shows an image of a map when the battery stations have been extracted.
Fig. 7 shows an image of a map when the battery stations have not been extracted.
Fig. 8 is a third diagram showing an exemplary screen in the car navigation system.

### DESCRIPTION OF THE PREFERRED EMBODIMENTS

An embodiment of the present disclosure will be described in detail below with reference to the drawings. The same or corresponding portions in the drawings are denoted by the same reference characters and description thereof will not be repeated.

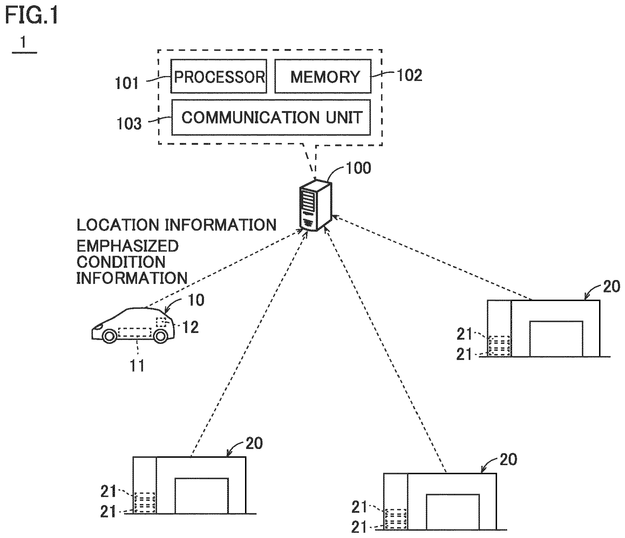

Fig. 1 shows a configuration of a battery replacement management system 1 according to this embodiment. Battery replacement management system 1 includes a server 100, an electric vehicle 10, and a plurality of battery stations 20. Note that battery station 20 is one example of "battery replacement facility" of the present disclosure.

Electric vehicle 10 includes a battery 11 and a communication device 12. Battery 11 supplies electric power to various electric devices such as a traveling motor (not shown) of electric vehicle 10. Note that battery 11 is one example of "secondary battery" of the present disclosure.

Communication device 12 of electric vehicle 10 communicates with a communication unit 103 (described later) of server 100. Electric vehicle 10 transmits its own location information to server 100 through communication device 12. Note that the location information may be transmitted to server 100 through a mobile terminal or the like carried by a user of electric vehicle 10.

Electric vehicle 10 includes, for example, a plug-in hybrid electric vehicle (PHEV), a battery electric vehicle (BEV), and a fuel cell electric vehicle (FCEV). Communication device 12 of electric vehicle 10 may include a data communication module (DCM), or a 5G (fifth-generation mobile communications system)-enabled communication I/F.

Each of the plurality of battery stations 20 includes a plurality of batteries 21 that are interchangeable with battery 11. Battery 11 of electric vehicle 10 is replaced with battery 21 in battery station 20.

Each of the plurality of battery stations 20 communicates with communication unit 103 of server 100. Communication unit 103 of server 100 acquires various types of information from each of the plurality of battery stations 20. The various types of information include information about a wait time until a battery replacement operation is performed in battery station 20 (i.e., crowdedness of battery station 20), information about a state of charge (SOC) of each battery 21, and the like.

The various types of information also include information about the type of batteries 21 provided in battery station 20. Specifically, information indicating whether or not batteries 21 having a capacity of 70 kWh or 100 kWh are stored in battery station 20 is transmitted from battery station 20 to server 100.

Server 100 includes a processor 101, a memory 102, and communication unit 103. Processor 101 controls communication unit 103. Memory 102 stores, in addition to programs for execution by processor 101, information (e.g., maps, mathematical formulas, and various parameters) for use in the programs. Note that processor 101 and communication unit 103 are one example of "control unit" and one example of "acquisition unit" of the present disclosure, respectively.

Memory 102 stores information about each of the plurality of battery stations 20. For example, memory 102 stores location information about each of the plurality of battery stations 20.

The plurality of battery stations 20 also include a version 1, which is an old type, of battery station 20, and a version 2, which is a new type, of battery station 20. Memory 102 stores information about the version of each of the plurality of battery stations 20. Note that version 1 of battery station 20 is one example of "old battery replacement facility" of the present disclosure, and version 2 of battery station 20 is one example of "new battery replacement facility" of the present disclosure.

Memory 102 also stores information about a facility near each of the plurality of battery stations 20. For example, memory 102 stores information indicating whether or not a convenience store or a toilet is located near each of the plurality of battery stations 20. Note that each of the convenience store and the toilet is one example of "specific facility" of the present disclosure.

Here, the user of electric vehicle 10 selects one battery station 20 for battery replacement out of the plurality of battery stations 20. In this case, selected battery station 20 may not meet a condition emphasized by the user (e.g., a condition that there is a toilet nearby). Therefore, there is a desire for a system that enables the user to readily use battery station 20 that meets the condition emphasized by the user.

In this embodiment, communication unit 103 of server 100 acquires information about a condition emphasized by the user of electric vehicle 10, out of the plurality of conditions for the plurality of battery stations 20.

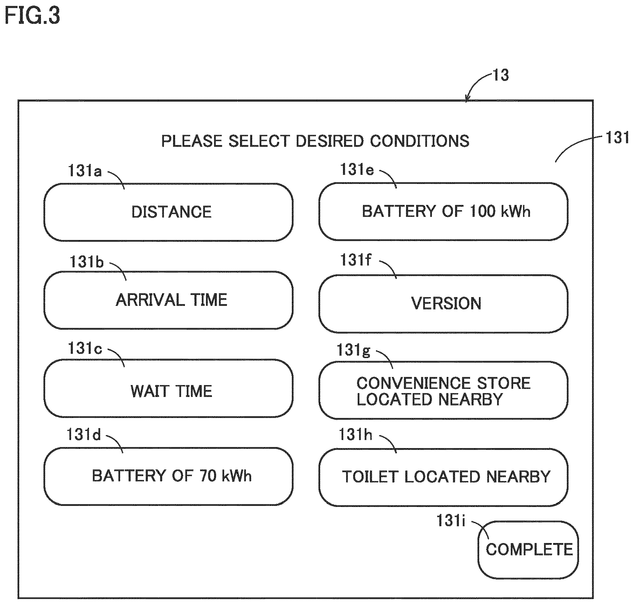

Specifically, when searching for battery station 20 for battery replacement, the user first selects a button 130a on a screen 130 displayed on a car navigation system 13 of electric vehicle 10. As a result, car navigation system 13 displays a screen 131 (see Fig. 3) that prompts the user to enter a condition emphasized by the user. Specifically, screen 131 displays words "Please select desired conditions." Note that button 130a says, for example, "Search for a battery station".

Screen 131 displays a plurality of conditions for the plurality of battery stations 20. Specifically, screen 131 displays buttons 131a to 131h related to the conditions described above. The user selects at least one of buttons 131a to 131h, to thereby notify server 100 of a condition emphasized by the user with respect to battery station 20.

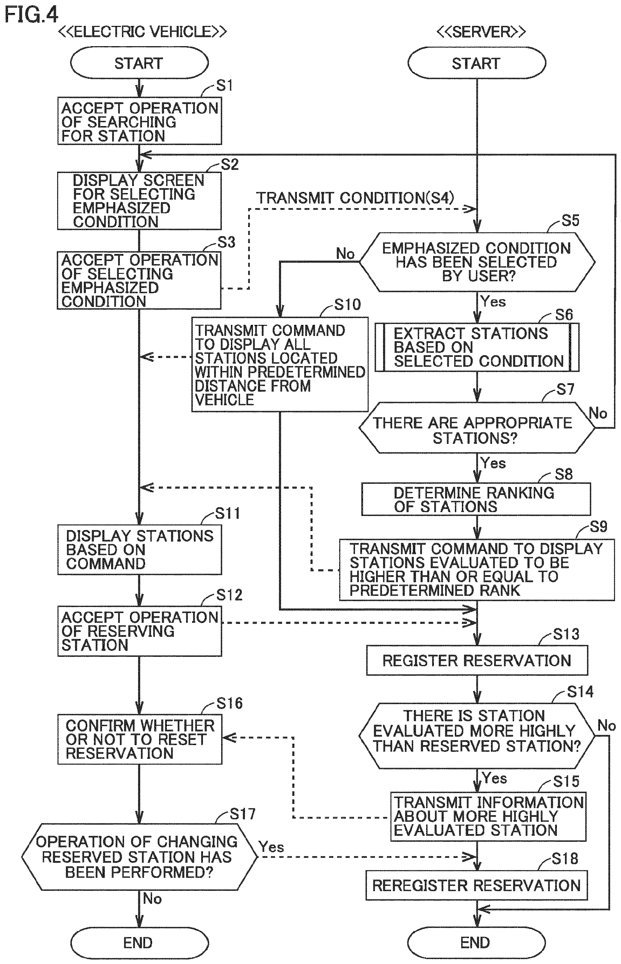

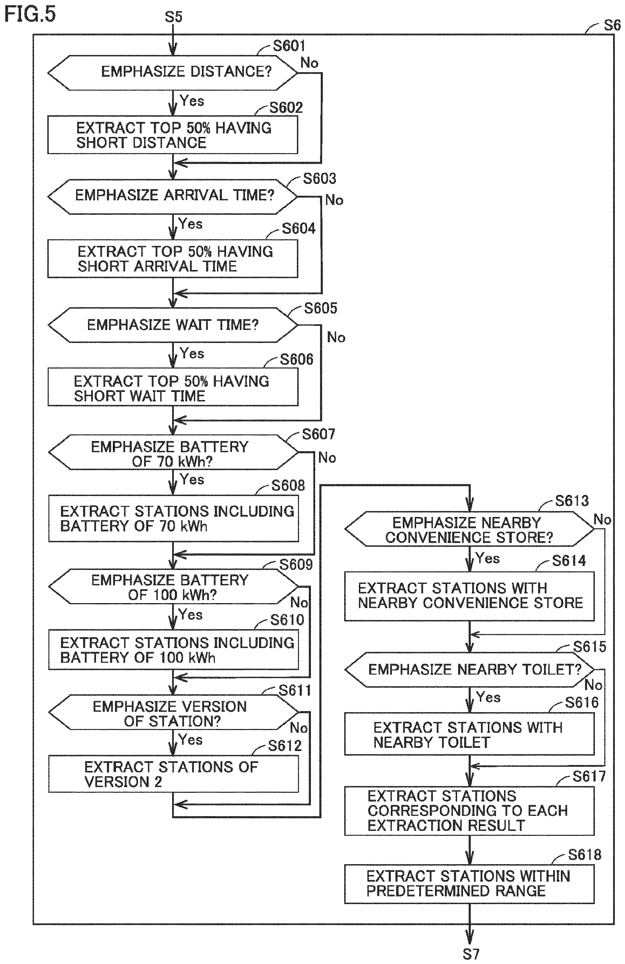

Based on the condition selected by the user, processor 101 of server 100 evaluates each of the plurality of battery stations 20. Specifically, processor 101 evaluates each of the plurality of battery stations 20 such that the effect of evaluation based on the condition (selected condition) emphasized by the user out of the plurality of conditions is greater than the effect of evaluation based on a condition (unselected condition) other than the condition emphasized by the user out of the plurality of conditions. The details will be described later with reference to sequence diagrams shown in Figs. 4 and 5.

Processor 101 then performs control of notifying the user of battery station 20 recommended as a result of the evaluation. Note that recommended battery station 20 is one example of "recommended facility" of the present disclosure.

Buttons 131a to 131h say "distance," "arrival time," "wait time," "battery of 70 kWh," "battery of 100 kWh," "version," "convenience store located nearby," and "toilet located nearby," respectively.

Screen 131 is also provided with a button 131i that says "complete." When button 131i is selected, information about the condition selected from buttons 131a to 131h by the user is transmitted to server 100. Note that the user may select a plurality of buttons of buttons 131a to 131h, or may not select any of buttons 131a to 131h.

### (Sequence Control of Battery Replacement Management System)

Referring now to Fig. 4, sequence control of battery replacement management system 1 is described.

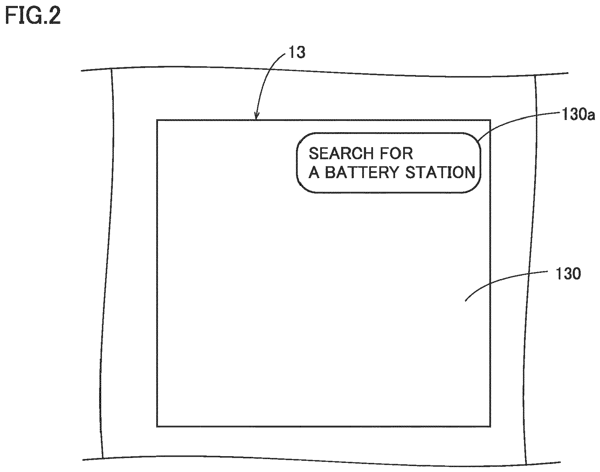

In step S1, based on the selection of button 130a (see Fig. 2) by the user, electric vehicle 10 accepts an operation of searching for battery station 20.

In step S2, electric vehicle 10 causes car navigation system 13 to display screen 131 (see Fig. 3) for selecting a condition emphasized by the user. Note that step S2 is one example of "performing control of prompting the user to enter the emphasized condition into the input terminal" of the present disclosure.

In step S3, based on the selection of one of buttons 131a to 131h (see Fig. 3) by the user, electric vehicle 10 accepts the selection of the condition emphasized by the user with respect to battery station 20. Note that none of the conditions may be selected in step S2.

In step S4, information about the condition selected in step S3 is transmitted from communication device 12 of electric vehicle 10 to communication unit 103 of server 100.

In step S5, processor 101 determines whether or not the condition emphasized with respect to battery station 20 has been selected by the user in step S3. When the emphasized condition has been selected (Yes in S5), the process proceeds to step S6. When the emphasized condition has not been selected (No in S5), the process proceeds to step S10.

In step S6, processor 101 extracts battery stations 20 based on the condition selected in step S3. Specifically, battery stations 20 are extracted by evaluation of each of the plurality of battery stations 20 such that the effect of evaluation based on the selected condition (the condition emphasized by the user) is greater than the effect of evaluation based on an unselected condition (a condition other than the condition emphasized by the user). The details will be described with reference to Fig. 5.

As shown in Fig. 5, step S6 includes processing of steps S601 to S618. In step S601, processor 101 determines, based on whether or not button 131a (see Fig. 3) has been selected, whether or not the user emphasizes a distance between electric vehicle 10 and battery station 20. When the distance is emphasized (Yes in S601), the process proceeds to step S602. When the distance is not emphasized (No in S601), the process proceeds to step S603.

In step S602, processor 101 extracts, from the plurality of battery stations 20, the top 50% of battery stations 20 having a short distance from electric vehicle 10, for example, as the highly evaluated top 50% of battery stations 20. The process then proceeds to step S603.

In step S603, processor 101 determines, based on whether or not button 131b (see Fig. 3) has been selected, whether or not the user emphasizes a time required for electric vehicle 10 to arrive at battery station 20. When the time is emphasized (Yes in S603), the process proceeds to step S604. When the time is not emphasized (No in S603), the process proceeds to step S605.

In step S604, processor 101 extracts, from the plurality of battery stations 20, the top 50% of battery stations 20 that require a short time for electric vehicle 10 to arrive, for example, as the highly evaluated top 50% of battery stations 20. Specifically, processor 101 extracts battery stations 20 using information about the distance between electric vehicle 10 and each battery station 20, information about traffic congestion on roads between electric vehicle 10 and each battery station 20, and the like. The process then proceeds to step S605.

In step S605, processor 101 determines, based on whether or not button 131c (see Fig. 3) has been selected, whether or not the user emphasizes a wait time until battery replacement is performed. When the wait time is emphasized (Yes in S605), the process proceeds to step S606. When the wait time is not emphasized (No in S605), the process proceeds to step S607.

In step S606, processor 101 extracts, from the plurality of battery stations 20, the top 50% of battery stations 20 having a short wait time until a battery replacement operation is performed, for example, as the highly evaluated top 50%. Specifically, processor 101 extracts battery stations 20 using information about the number of people who reserved battery stations 20, information about the state of charge (SOC) of each battery 21 in battery stations 20, and the like. The process then proceeds to step S607.

In step S607, processor 101 determines, based on whether or not button 131d (see Fig. 3) has been selected, whether or not the user emphasizes the fact that battery 21 having a capacity of 70 kWh is stored. When battery 21 of 70 kWh is emphasized (Yes in S607), the process proceeds to step S608. When battery 21 of 70 kWh is not emphasized (No in S607), the process proceeds to step S609. Note that battery 21 having a capacity of 70 kWh is one example of "a specific type of battery" of the present disclosure.

In step S608, processor 101 extracts, from the plurality of battery stations 20, battery stations 20 storing batteries 21 having a capacity of 70 kWh as highly evaluated battery stations 20. The process then proceeds to step S609.

In step S609, processor 101 determines, based on whether or not button 131e (see Fig. 3) has been selected, whether or not the user emphasizes the fact that battery 21 having a capacity of 100 kWh is stored. When battery 21 of 100 kWh is emphasized (Yes in S609), the process proceeds to step S610. When battery 21 of 100 kWh is not emphasized (No in S609), the process proceeds to step S611. Note that battery 21 having a capacity of 100 kWh is one example of "a specific type of battery" of the present disclosure.

In step S610, processor 101 extracts, from the plurality of battery stations 20, battery stations 20 storing batteries 21 having a capacity of 100 kWh as highly evaluated battery stations 20. The process then proceeds to step S611.

In step S611, processor 101 determines, based on whether or not button 131f (see Fig. 3) has been selected, whether or not the user emphasizes a version of battery station 20. When the version is emphasized (Yes in S611), the process proceeds to step S612. When the version is not emphasized (No in S611), the process proceeds to step S613.

In step S612, processor 101 extracts, from the plurality of battery stations 20, battery stations 20 of version 2 as highly evaluated battery stations 20. The process then proceeds to step S613.

In step S613, processor 101 determines, based on whether or not button 131g (see Fig. 3) has been selected, whether or not the user emphasizes the fact that a convenience store is located near battery station 20. When the convenience store is emphasized (Yes in S613), the process proceeds to step S614. When the convenience store is not emphasized (No in S613), the process proceeds to step S615.

In step S614, processor 101 extracts, from the plurality of battery stations 20, battery stations 20 with a convenience store located nearby as highly evaluated battery stations 20. The process then proceeds to step S615.

In step S615, processor 101 determines, based on whether or not button 131h (see Fig. 3) has been selected, whether or not the user emphasizes the fact that a toilet is located near battery station 20. When the toilet is emphasized (Yes in S615), the process proceeds to step S616. When the toilet is not emphasized (No in S615), the process proceeds to step S617.

In step S616, processor 101 extracts, from the plurality of battery stations 20, battery stations 20 with a toilet located nearby as highly evaluated battery stations 20. The process then proceeds to step S617.

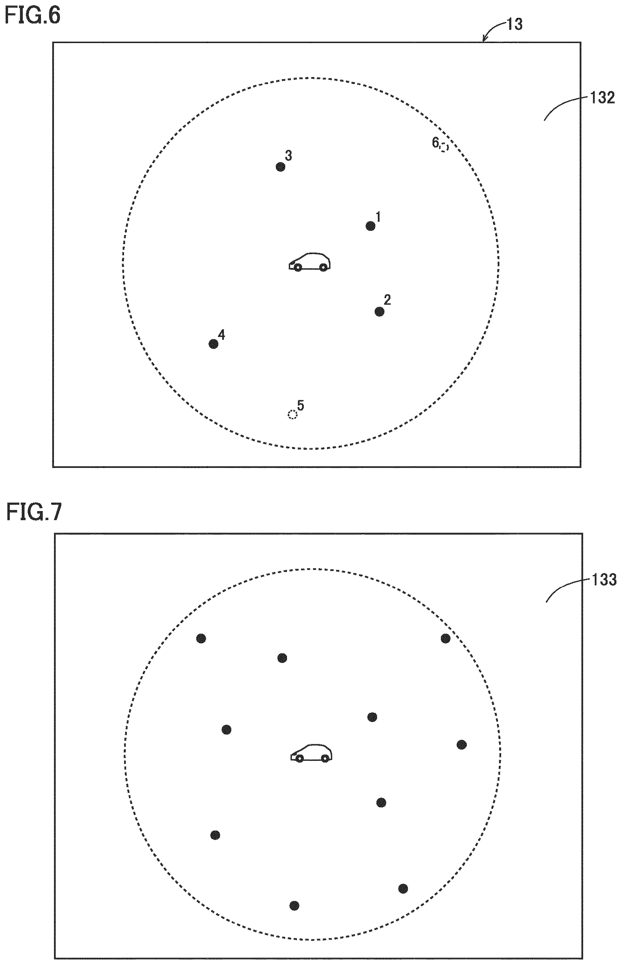

In step S617, processor 101 extracts battery stations 20 corresponding to each extraction result. An example where the user emphasizes the distance (S601) and the wait time (S605) will be described with reference to Fig. 6.

Assume that there are battery stations 20 from A to F. Battery stations 20 from A to F have the distance increasing in the order of A, B, C, D, E and F. In addition, battery stations 20 from A to F have the wait time increasing in the order of B, C, D, A, E and F. In this case, battery stations 20 of B and C corresponding to both the top 50% of battery stations 20 (A, B and C) having the short distance and the top 50% of battery stations 20 (B, C and D) having the short wait time are extracted.

In step S618, processor 101 extracts, from battery stations 20 extracted in step S617, battery stations 20 located within a predetermined distance (e.g., 10 km) from the current location of electric vehicle 10. Note that the extraction process according to each of the conditions may be performed from the plurality of battery stations 20 located within the predetermined distance.

Although the flow shown in Fig. 5 is illustrated in series, the extraction processes may be performed in parallel (concurrently with each other). Alternatively, from battery stations 20 extracted according to the condition of a previous step, battery stations 20 may be extracted according to the condition of a next step.

Referring again to Fig. 4, in step S7, processor 101 determines whether or not there are (one or more) battery stations 20 extracted in step S6. When there are battery stations 20 (Yes in S7), the process proceeds to step S8. When there are no battery stations 20 (No in S7), the process returns to step S2.

In step S8, processor 101 determines a ranking of battery stations 20 extracted in step S6, which indicates how highly battery stations 20 are evaluated. For example, processor 101 may assign a higher rank to extracted battery station 20 as the distance decreases. Note that, when button 131a related to the distance has not been selected on screen 131 (see Fig. 3), the ranking may be determined based on another condition (e.g., the shortness of the wait time).

In step S9, processor 101 transmits, to electric vehicle 10, a command to display battery stations 20 evaluated to be higher than or equal to a predetermined rank (e.g., fourth place).

In step S10, on the other hand, processor 101 transmits, to electric vehicle 10, a command to display all battery stations 20 located within the predetermined distance (e.g., within 10 km) from the current location of electric vehicle 10.

In step S11, electric vehicle 10 causes car navigation system 13 to display battery stations 20 based on the command in step S9 or S10 on a map (132, 133). Note that step S11 is one example of "notifying" of the present disclosure.

Fig. 6 shows map 132 displayed based on the command in step S9. In the example shown in Fig. 6, battery stations 20 located within a range of a predetermined distance (an area within a dashed line in Fig. 6) from the current location of electric vehicle 10, and determined in step S8 to be ranked higher than or equal to the predetermined rank (e.g., fourth place) are displayed on map 132. Specifically, when six battery stations 20 have been extracted by the extraction process of step S6, only first-place to fourth-place battery stations 20 in the ranking of evaluation are displayed on map 132. For clarity, fifth-place and sixth-place battery stations 20, which are not actually shown, are indicated by dashed lines in Fig. 6.

In this case, the rank of evaluation corresponding to each of first-place to fourth-place battery stations 20 is displayed on car navigation system 13. Specifically, as shown in Fig. 6, the rank corresponding to each battery station 20 is displayed in the vicinity of each battery station 20 displayed on map 132.

Fig. 7 shows, on the other hand, map 133 displayed based on the command in step S10. In the example shown in Fig. 7, all battery stations 20 located within a range of a predetermined distance (an area within a dashed line in Fig. 7) from the current location of electric vehicle 10 are displayed on map 133.

In step S12, electric vehicle 10 accepts an operation of reserving battery station 20. Specifically, battery station 20 to be reserved is selected when the user selects (touches) battery station 20 displayed on map 132 (see Fig. 6) or map 133 (see Fig. 7). Note that battery station 20 may be selected based on a touch operation on a list displayed at a position different from map 132 (133), instead of based on the touch operation on map 132 (133). Note that, based on the selection of battery station 20, selected battery station 20 may be set as a destination in car navigation system 13.

In step S13, server 100 (processor 101) performs a process of registering the reservation of battery station 20 selected in step S12.

In step S14, processor 101 determines whether or not there is battery station 20 evaluated more highly than battery station 20 reserved in step S13. For example, processor 101 continues the extraction process in step S6 for a predetermined time (e.g., 10 minutes) after the reservation registration. Note that the extraction process may be continued until electric vehicle 10 arrives at reserved battery station 20. When there is a more highly evaluated battery station (Yes in S14), the process proceeds to step S15. When there is not a more highly evaluated battery station (No in S14), the process ends. Note that the processing after step S14 may not be performed if the process of step S10 is performed.

In step S15, processor 101 notifies electric vehicle 10 of information about battery station 20 determined to be more highly evaluated in step S14.

In step S16, electric vehicle 10 performs control of confirming with the user whether or not to reserve battery station 20 notified in step S15 (whether or not to reset the reservation). For example, electric vehicle 10 causes car navigation system 13 to display a screen 134 (see Fig, 8) that displays words "A battery station that better meets the condition has been detected. Reset the reservation?" Note that the process of step S16 is one example of "prompting the user to perform battery replacement in another battery replacement facility" of the present disclosure.

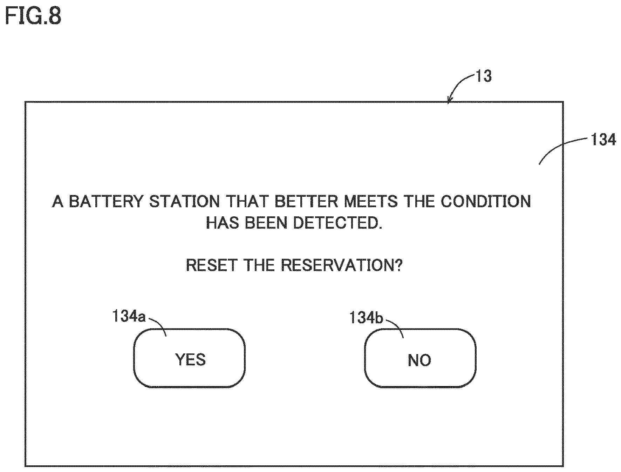

In step S17, electric vehicle 10 determines whether or not an operation of changing reserved battery station 20 has been performed. When a button 134a that says "Yes" is selected on screen 134 (see Fig. 8) (Yes in S17), the process proceeds to step S18. When a button 134b that says "No" is selected on screen 134 (No in S17), the process ends.

In step S18, processor 101 performs control of reserving battery station 20 notified in step S15.

As has been described, in the above embodiment, battery station 20 recommended to the user out of the plurality of battery stations 20 is determined by evaluation of each of the plurality of battery stations 20 based on the information about the conditions emphasized by the user of electric vehicle 10 with respect to battery station 20. This can allow the user to readily use battery station 20 that meets the condition emphasized by the user. This can also save the user himself/herself from having to search for optimal battery station 20 while viewing the information about each of the plurality of battery stations 20.

Although battery station 20 that does not correspond to each one of the conditions selected by the user is not extracted in the example of the above embodiment, the present disclosure is not limited to this. For example, if points are assigned to each condition, and battery station 20 has a high total value of points for the selected conditions, this battery station 20 may be extracted even if it does not correspond to any one of the selected conditions. Note that the points may vary with each condition.

Although the effect of evaluation based on the condition emphasized by the user is greater than the effect of evaluation based on a condition other than the condition emphasized by the user in the example of the above embodiment, the present disclosure is not limited to this. For example, assume that 10 points and 5 points are assigned as initial values (default values) of evaluation points to the condition on the distance (see 131a in Fig. 3) and the condition on the wait time (see 131c in Fig. 3), respectively. Here, when the user selects only the condition on the wait time, the evaluation points of the condition on the wait time may be increased to 7 points, for example. In this manner, while the evaluation points themselves of the condition selected by the user may be increased, the increased evaluation points may be smaller than the evaluation points of the unselected condition.

In addition, battery stations 20 may be extracted based on a condition (e.g., the SOC of each battery 21) other than the conditions listed as examples in the above embodiment.

Although the top 50% of the plurality of battery stations 20 with regard to each of the distance, the time required for the vehicle to arrive at battery station 20, and the wait time are extracted in the example of the above embodiment, the present disclosure is not limited to this. For example, battery stations 20 that exceed a predetermined threshold value for each of the conditions (e.g., that meet a condition that the distance is within 5 km) may be extracted.

Although the operation of selecting the condition emphasized by the user is performed on screen 131 (see Fig. 3) of car navigation system 13 in the example of the above embodiment, the present disclosure is not limited to this. If the emphasized condition is set in advance (set by default), the selection operation on screen 131 may not be performed.

Although an embodiment of the present disclosure has been described, it should be understood that the embodiment disclosed herein is illustrative and non-restrictive in every respect. The scope of the present disclosure is defined by the terms of the claims and is intended to include any modifications within the scope and meaning equivalent to the terms of the claims.

## Claims

1. A method for informing of a battery replacement facility (20), the method comprising:
acquiring condition information about a condition emphasized by a user of an electric vehicle (10), out of a plurality of conditions for a plurality of battery replacement facilities (20) for replacement of a secondary battery (11) mounted on the electric vehicle (10);
determining at least one recommended facility (20) by evaluating each of the plurality of battery replacement facilities (20) based on the condition information, the at least one recommended facility (20) being a battery replacement facility (20) recommended to the user out of the plurality of battery replacement facilities (20); and
notifying the user of information about the at least one recommended facility (20).

2. The method for informing of a battery replacement facility (20) according to claim 1, wherein
the determining includes determining the at least one recommended facility (20) by evaluating each of the plurality of battery replacement facilities (20) such that an effect of evaluation based on the condition emphasized by the user out of the plurality of conditions is greater than an effect of evaluation based on a condition other than the condition emphasized by the user out of the plurality of conditions.

3. The method for informing of a battery replacement facility (20) according to claim 1 or 2, further comprising:
when the recommended facility (20) notified by the notifying is reserved by the user, and then another battery replacement facility (20) is evaluated more highly than the reserved recommended facility (20), prompting the user to perform battery replacement in the another battery replacement facility (20).

4. The method for informing of a battery replacement facility (20) according to claim 1 or 2, wherein
the determining includes determining the at least one recommended facility (20) by evaluating each of the plurality of battery replacement facilities (20) such that, when the emphasized condition includes a condition on a distance between the electric vehicle (10) and the battery replacement facility (20), a battery replacement facility (20) shorter in the distance is evaluated more highly.

5. The method for informing of a battery replacement facility (20) according to claim 1 or 2, wherein
the determining includes determining the at least one recommended facility (20) by evaluating each of the plurality of battery replacement facilities (20) such that, when the emphasized condition includes a condition on a time required for the electric vehicle (10) to arrive at the battery replacement facility (20), a battery replacement facility (20) shorter in the time is evaluated more highly.

6. The method for informing of a battery replacement facility (20) according to claim 1 or 2, wherein
the determining includes determining the at least one recommended facility (20) by evaluating each of the plurality of battery replacement facilities (20) such that, when the emphasized condition includes a condition on a wait time until a battery replacement operation is performed, a battery replacement facility (20) shorter in the wait time is evaluated more highly.

7. The method for informing of a battery replacement facility (20) according to claim 1 or 2, wherein
the determining includes determining the at least one recommended facility (20) by evaluating each of the plurality of battery replacement facilities (20) such that, when the emphasized condition includes a condition of whether or not the battery replacement facility (20) stores a specific type of battery, evaluation corresponding to a battery replacement facility (20) storing the specific type of battery is higher than evaluation corresponding to a battery replacement facility (20) not storing the specific type of battery.

8. The method for informing of a battery replacement facility (20) according to claim 1 or 2, wherein
the plurality of battery replacement facilities (20) include a new battery replacement facility (20) of a new type, and an old battery replacement facility (20) of an old type, and
the determining includes determining the at least one recommended facility (20) by evaluating each of the plurality of battery replacement facilities (20) such that, when the emphasized condition includes a condition on newness of the battery replacement facility (20), evaluation corresponding to the new battery replacement facility (20) is higher than evaluation corresponding to the old battery replacement facility (20).

9. The method for informing of a battery replacement facility (20) according to claim 1 or 2, wherein
the determining includes determining the at least one recommended facility (20) by evaluating each of the plurality of battery replacement facilities (20) such that, when the emphasized condition includes a condition on a facility near the battery replacement facility (20), evaluation corresponding to a battery replacement facility (20) with a specific facility located nearby is higher than evaluation corresponding to a battery replacement facility (20) without the specific facility located nearby.

10. The method for informing of a battery replacement facility (20) according to claim 1 or 2, wherein
the at least one recommended facility (20) includes a plurality of recommended facilities (20), and
the notifying includes displaying a rank of evaluation corresponding to each of the plurality of recommended facilities (20) on a display terminal (13) of the user.

11. The method for informing of a battery replacement facility (20) according to claim 1 or 2, further comprising:
when an operation of searching for a battery replacement facility (20) for battery replacement out of the plurality of battery replacement facilities (20) is performed on an input terminal (13) of the user, performing control of prompting the user to enter the emphasized condition into the input terminal (13).

12. The method for informing of a battery replacement facility (20) according to claim 1 or 2, wherein
the at least one recommended facility (20) includes a plurality of recommended facilities (20), and
the notifying includes displaying a recommended facility (20) evaluated to be higher than a predetermined rank out of the plurality of recommended facilities (20) on a map (132) on a display terminal (13) of the user, without displaying a recommended facility (20) evaluated to be lower than or equal to the predetermined rank out of the plurality of recommended facilities on the map (132).

13. The method for informing of a battery replacement facility (20) according to claim 1 or 2, wherein
the notifying includes, when an operation of searching for a battery replacement facility (20) for battery replacement out of the plurality of battery replacement facilities (20) is performed by the user, and the condition information is not acquired, displaying all battery replacement facilities (20) located within a predetermined distance from the electric vehicle (10) out of the plurality of battery replacement facilities (20) on a map (133) on a display terminal (13) of the user.

14. A server (100) comprising:
an acquisition unit (103) that acquires condition information about a condition emphasized by a user of an electric vehicle (10), out of a plurality of conditions for a plurality of battery replacement facilities (20) for replacement of a secondary battery (11) mounted on the electric vehicle (10); and
a control unit (101) that performs control of notifying the user of information about at least one recommended facility (20), the at least one recommended facility (20) being a battery replacement facility (20) recommended to the user out of the plurality of battery replacement facilities (20), wherein
the control unit (101) determines the at least one recommended facility (20) based on the condition information.
